# EUROPEAN PATENT APPLICATION

(11) **EP 3 771 126 A1**
(43) Date of publication of application: **27.01.2021**
(21) Application number: 19315076.0
(22) Date of filing: 25.07.2019
(51) Int. Cl.: H04L 5/00

(54) **SPECTRUM OPTIMIZATION IN CARRIER AGGREGATION COMMUNICATION SYSTEM**

(71) Applicant: Mitsubishi Electric R&D Centre Europe B.V., 1119 NS Schiphol Rijk Amsterdam (NL); Mitsubishi Electric Corporation, Tokyo 100-8310 (JP)
(72) Inventor: Ciochina, Cristina, 35708 Rennes Cedex 7 (FR); Charaf, Aki, 35708 Rennes Cedex 7 (FR); Brunel, Loïc, 35708 Rennes Cedex 7 (FR)
(74) Representative: Plasseraud IP

(57) **Abstract**

The invention relates to a method for allocating radio resources to at least one user equipment in a wireless communication system comprising at least a first carrier and a second carrier, said first carrier having a first transmission bandwidth said second carrier having a second transmission bandwidth, such as at least a first subcarrier of the first transmission bandwidth is in the second transmission bandwidth, the method comprising:
- Allocating first radio resources of the first carrier, said first radio resources allocated comprising the first subcarrier;
- Allocating second radio resources of the second carrier taking into account the first subcarrier used in the allocation of the first radio resources.

## Description

The present invention generally relates to resource allocation to user equipment in a wireless communication system which comprises several carriers.

The present invention applies in multicarrier telecommunication systems for example telecommunication systems using OFDMA, SC-FDMA or other OFDM-based waveform.

However, these telecommunication systems use frequency bandwidth which may be fixed independently to any consideration regarding the size of the carriers in use in the telecommunication technology implemented. For example, the new radio standard which replaces LTE does not implement carriers with the same bandwidth size as those implemented in LTE.

Therefore, when deploying a telecommunication system in a frequency bandwidth belonging to an operator, it may not be possible to decompose this frequency bandwidth as a combination of transmission bandwidths corresponding to the telecommunication technology implemented. Thus, some portions of the frequency bandwidth may not be used by the operator leading to excessive resource waste.

More generally, the present invention aims to improve situations where portions of the frequency bandwidth are not used.

To that end, the invention relates to a method for allocating radio resources to at least one user equipment in a wireless communication system comprising at least a first carrier and a second carrier, said first carrier having a first transmission bandwidth, said second carrier having a second transmission bandwidth, such as at least a first subcarrier of the first transmission bandwidth is in the second transmission bandwidth, the method comprising:
- allocating first radio resources of the first carrier, said first radio resources allocated comprising the first subcarrier;
- allocating second radio resources of the second carrier taking into account the first subcarrier used in the allocation of the first radio resources.

The present invention enables to implement carriers with transmission bandwidths that overlap. Therefore, when a portion of the frequency bandwidth is not used, the invention enables to implement a carrier whose transmission bandwidth covers the unused portion of the frequency bandwidth or at least part of the unused portion even if the carrier has a transmission bandwidth larger than the unused portion. In this case the transmission bandwidth of the carrier may overlap with the transmission bandwidth of another carrier. The invention reduces the risk of having same time and frequency radio resources of each overlapped carrier to be used jointly which would induce strong interferences. Indeed, the scheduling and/or allocating of radio resources of the two overlapped carriers (their transmission bandwidths are overlapping) is done jointly or at least the scheduling and/or allocating of radio resources of one carrier is made according to the radio resources scheduled and/or allocated in the other overlapped carrier.

By radio resources it is understood resources that are used in the wireless communication system to transport data. These radio resources occupy space in the frequency and time domain. In the frequency domain the radio resources may be transported via subcarriers. The smallest radio resources that can be allocated are radio resource units (for example, resource blocks in LTE).

A transmission bandwidth of a carrier is a frequency bandwidth that can be used to transmit data through the carrier. That is, radio resources of the carrier are, in the frequency domain, included in the transmission bandwidth. Therefore, the subcarriers that can be used to transmit data through the carrier are, in the frequency domain, included in the transmission bandwidth.

By allocating radio resources of the carrier it is understood that radio resources of the carrier are determined to be used for downlink or uplink communication with at least one user equipment. The radio resources can be allocated to the at least one user equipment, to several user equipments or all the user equipments in the coverage of the transmitter using the carrier for transmission. Radio resource allocation is generally done by the transmitter, for example a base station, even though the invention is not limited to such implementation. For example, the invention could be implemented in D2D communication or by a specific unit. When it is a base station that allocates radio resources to a user equipment either in downlink or in uplink, the base station transmits control data to this user equipment to inform which radio resources are allocated to it.

By radio resources comprising a subcarrier it is understood that using these radio resources involves using the subcarrier. Put in another way, transmitting data through these radio resources involves using the subcarrier to transmit at least part of the data.

The transmission bandwidths (the first respectively the second transmission bandwidth) may not be included in the other bandwidth (the second respectively the first transmission bandwidth). More generally, the first respectively the second radio resources allocated may not be included in the second respectively the first transmission bandwidth (that is the radio resources allocated may not be included in the intersection of the first and second transmission bandwidth). Thus, the second radio resources allocated may comprise at least a second subcarrier outside the transmission bandwidth of the first carrier. The first radio resources allocated may comprise at least a third subcarrier outside the transmission bandwidth of the second carrier.

In the time domain at least part of the first radio resources and part of the second radio resources occupy the same time resources. That is, transmission of data in those radio resources occurs at the same time or partly at the same time. Put in another way, the time interval corresponding to the first radio resources and the time interval corresponding to the second radio resources overlap. More specifically, these time intervals are the same, that is, the first and second radio resources occupy the same time period in the time domain. For example, in LTE the first and second radio resources (which are resource blocks) are allocated in the same time slot.

According to an aspect of the invention an excluding frequency bandwidth including the first subcarrier is excluded from the allocation of second radio resources.

This enables to avoid radio resources of the second carrier comprising the first subcarrier and/or a subcarrier (of the second carrier) of a frequency proximate to the frequency of the first subcarrier to be allocated. By frequency proximate to the frequency of the first subcarrier it is understood that the two subcarriers are not spaced enough in the frequency domain to avoid interferences between these two subcarriers, for example in the case where the two carriers use different subcarrier spacing configurations. Put in another way, two subcarriers (or the frequency of these carriers) may be proximate to each other when no subcarrier of the widest subcarrier spacing configuration (SSC) among the SSCs of the two subcarriers can be allocated between the two proximate subcarriers. In a more general manner, two subcarriers (or the frequency of these carriers) may be proximate to each other when the frequency difference between them is below a given threshold.

By a frequency bandwidth excluded from the allocation of radio resources, it is understood that in the frequency domain the intersection of the frequency bandwidth used by the allocated radio resources and the excluding frequency bandwidth is empty. Put in another way, the radio resources allocated do not overlap the excluding frequency bandwidth.

According to an aspect of the invention, the excluding frequency bandwidth corresponds to an intersect of the first transmission bandwidth and the second transmission bandwidth.

Therefore, no radio resources of the second carrier are allocated in the bandwidth corresponding to the intersection of the first transmission bandwidth and the second transmission bandwidth. Therefore, all the radio resources of the first carrier can be allocated as if there weren't any overlapping of the first and second transmission bandwidth.

This is especially advantageous when the first carrier is a primary cell and/or the second carrier is a secondary cell. Indeed, primary cells transmit more critical information, especially control information enabling the user equipment to connect to the cell and/or information enabling to achieve proper handovers and/or information enabling to synchronize to the carrier. Therefore, if critical information is transmitted via the radio resources of the first carrier and that those radio resources overlap at least partially the second transmission bandwidth, allocating radio resources of the second carrier in the second transmission bandwidth may lead to interference and/or more restrictive scheduling constraints and therefore may complicate the decoding of this critical information.

According to an aspect of the invention, the invention further comprises deactivating transmission of synchronization signals in one carrier among the first carrier and the second carrier.

Since synchronization signals are set in predefined radio resources, some of those predefined radio resources may be in (or at least partly in) the intersection of the first and second transmission bandwidth. Therefore, using these predefined radio resources of one carrier (first respectively second) could interfere with the radio resources allocated in the other carrier (second respectively first). Therefore, deactivating transmission of synchronization signals enables to reduce interference and/or enables to reduce the scheduler complexity.

According to an aspect of the invention, the invention further comprises configuring a first time periodicity of transmission of synchronization signals in the first carrier and a second time periodicity of transmission of synchronization signals in the second carrier such as to reduce transmission of synchronization signals in the first carrier that occur at the same time as transmission of synchronization signals in the second carrier.

This enables to reduce interferences occurring on the synchronization signals of one carrier due to the use of radio resources of the other carrier, especially when used for transmitting synchronization signals.

According to an aspect of the invention, the invention further comprises, configuring one carrier among the first and the second carrier such as synchronization signals in said one carrier are transmitted in a transmission bandwidth of said one carrier excluding at least part of an intersect of the first transmission bandwidth and of the second transmission bandwidth.

This enables to reduce interferences occurring on the synchronization signals of one carrier due to the use of radio resources of the other carrier.

Part of an intersect of the first transmission bandwidth and of the second transmission bandwidth may be the excluding frequency bandwidth mentioned above when the one carrier configured is the second carrier.

According to an aspect of the invention, at least one synchronization signal of the first carrier is transmitted through the first subcarrier.

This enables to reduce interferences occurring on the at least one synchronization signal of the first carrier due to the use of radio resources of the second carrier.

According to an aspect of the invention, the invention further comprises defining radio resources of the second carrier corresponding to the first subcarrier as reserved resources.

By setting the radio' resources of the second carrier corresponding to the first subcarrier as reserved resources it is understood that the radio resources of the second carrier that overlap the subcarrier or at least that used subcarriers proximate to the first subcarrier are set as reserved resources. Setting radio resources of the second carrier as reserved resources avoids these radio resources of the second carrier to be allocated. Therefore, this enables to avoid radio resources of the second carrier using the first subcarrier or a subcarrier of a frequency proximate to the frequency of the first subcarrier to be allocated through the second carrier.

According to an aspect of the invention, F_{1,min} is a lowest frequency among frequencies of subcarriers in the first transmission bandwidth and F_{1,max} is a highest frequency among frequencies of subcarriers in the first transmission bandwidth and with F_{2,min} is a lowest frequency among frequencies in the second transmission bandwidth and F_{2,max} is a highest frequency among frequencies of subcarriers in the second transmission bandwidth, if F_{1,min} is smaller than F_{2,min} then at the exclusion of radio resources used to transmit synchronization signals, the first radio resources allocated are included in a frequency band from F_{1,min} to F₁ and the second radio resources allocated are included in a frequency band from F₂ to F_{2,max} with F_{2,min}-Δ_{SSC1} ≤ F₁ < F₂ < F_{1,max} or F_{2,min} < F₁ < F₂ ≤ F_{1,max}+Δ_{SSC2}, if F_{1,min} is greater than F_{2,min} then at the exclusion of radio resources used to transmit synchronization signals, the first radio resources allocated are included in a frequency band from F₁ to F_{1,max} and the second radio resources allocated are included in a frequency band from F_{2,min} to F₂ with F_{1,min} - Δ_{SSC2} ≤ F₂ < F₁ < F_{2,max} or F_{1,min} < F₂ < F₁ ≤ F_{2,max} + Δ_{SSC1}, where Δ_{SSC1}, respectively Δ_{SSC2} is a subcarrier spacing configuration of the subcarriers in the first, respectively second transmission bandwidth.

By lowest respectively highest frequency among frequencies of subcarriers in a transmission bandwidth it is understood the lowest respectively the highest frequency of the subcarriers that can be allocated in the transmission bandwidth (used for allocated radio resources).

Δ_{SSC1} is a subcarrier spacing configuration of subcarriers in the first transmission bandwidth, that is, Δ_{SSC1} represents the frequency difference between two contiguous subcarriers in the first transmission bandwidth.

Δ_{SSC2} is a subcarrier spacing configuration of subcarriers in the second transmission bandwidth, that is, Δ_{SSC2} represents the frequency difference between two contiguous subcarriers in the second transmission bandwidth.

This enables to simplify the scheduling and/or the allocation of radio resources at the exclusion of the radio resources used to transmit synchronization signals. Indeed, a carrier with fragmented available radio resources requires more computing to schedule and allocate these resources.

In addition, the signaling of the allocation may require more bits to be transmitted. For example, when allocating groups of radio resources, signaling to the user equipment of an allocation is simplified when these radio resources are contiguous radio resources.

Using fragmented available radio resources may also require more power for the transmitter and the receiver to transmit and receive data than in the case of contiguous available radio resources. Indeed, in the case of fragmented radio resources the spectral distribution is broader.

More generally, the invention can be implemented only regarding one carrier, for example, when F_{1,min} is the lowest frequency among frequencies of subcarriers in the first transmission bandwidth and F_{1,max} is the highest frequency among frequencies of subcarriers in the first transmission bandwidth and with F_{2,min} is the lowest frequency among frequencies in the second transmission bandwidth and F_{2,max} is the highest frequency among frequencies of subcarriers in the second transmission bandwidth, if F_{1,min} is smaller than F_{2,min} then at the exclusion of radio resources used to transmit synchronization signals, the first radio resources allocated are included in a frequency band from F_{1,min} to F₁ with F_{2,min} - Δ_{SSC2} ≤ F₁ < F_{1,max}, if F_{1,min} is greater than F_{2,min} then at the exclusion of radio resources used to transmit synchronization signals, the first radio resources allocated are included in a frequency band from F₁ to F_{1,max} with F_{1,min} < F₁ ≤ F_{2,max} + Δ_{SSC1}.

This can also be implemented with the one carrier being the second carrier.

F₁ and F₂ may be respectively different than F_{2,max} ± Δ_{SSC1} and F_{1,max} ± Δ_{SSC2}.

The transmitter (for example the base station) may transmit information regarding the frequencies F₁ and/or F₂ to the user equipment. This information may enable the user equipment to determine the part of a transmission bandwidth which is effectively used for transmission in the carrier. Therefore, the user equipment may process only the part of the radio signal received in the bandwidth [F_{1,min}; F₁] and/or [F₂; F_{2,max}] if F_{1,min} is smaller than F_{2,min} or [F_{2,min}; F₂] and/or [F₁; F_{1,max}] if F_{2,min} is smaller than F_{1,min}. Therefore, the complexity of the decoding on the receiver side is simplified.

According to an aspect of the invention if a subcarrier spacing configuration of the first carrier is equal to a subcarrier spacing configuration of the second carrier, then |F₁ - F₂| at least equals the subcarrier spacing.

That is, the space in the frequency domain between the parts of each transmission bandwidth effectively used for transmission in each carrier is at least equal to the subcarrier spacing configuration, that is, to the space between two contiguous subcarriers of this subcarrier spacing configuration. This enables to use all the subcarriers in the bandwidth equal to the union of the first and second transmission bandwidths through either the first or the second carrier. Therefore, no radio resources are lost.

In addition, when the wireless communication system is an OFDM system the orthogonality property between the subcarriers of the first carrier and the subcarriers of the second carrier is maintained, therefore, reducing the inter-subcarrier interferences.

More generally, |F₁ - F₂| may be equal to a multiple of the subcarrier spacing configuration, therefore maintaining the orthogonality property between the subcarriers of the first and second carriers while introducing a guard band between the subcarriers available in the first carrier and the subcarriers available in the second carrier.

According to an aspect of the invention if a subcarrier spacing configuration of the first carrier is different from a subcarrier spacing configuration of the second carrier, then |F₁ - F₂| is greater than a positive threshold.

This enables to set a guard band between the subcarriers available in the first carrier and the subcarriers available in the second carrier. Especially, since the subcarriers of the first carrier and the subcarriers of the second carrier do not share the same subcarrier spacing configuration therefore more likely to undergo inter-subcarrier interferences.

According to an aspect of the invention a carrier among the first carrier and the second carrier is included in a frequency block, said frequency block comprising another carrier, the method further comprising configuring the carrier and the another carrier such as a transmission bandwidth of the carrier is greater or equal than a transmission bandwidth of the another carrier.

A frequency block is a frequency bandwidth including one or several carriers. Generally, all the carriers of a frequency block are operated by the same operator. They may or not be component carriers of a carrier aggregation scheme.

The carriers in the frequency block may not overlap each other. That is, the intersection of two carriers' transmission bandwidths may be empty.

This enables to maximize the size of the carrier (first respectively second carrier) in the frequency block which is overlapped by other carriers (second respectively first carrier) especially carriers from other frequency block, thus the portion of the transmission bandwidth which is impacted by the overlapping carrier (second respectively first carrier) is reduced compared to the size of the transmission bandwidth. This enables to reduce the impact of the overlapping carrier on the carrier (first respectively second carrier), for example, the impact on the control data (control data can more easily be positioned in the non-overlapped portion of transmission bandwidth), impact on scheduling and/or allocating.

The second carrier may also be in a frequency block with another carrier, the first carrier being or not in a frequency block as described above. The features related to the frequency block and to the configurations of the carriers in the frequency block can be implemented as well to this other frequency block and to the second carrier and the another carrier it contains.

According to an aspect of the invention, the invention comprises configuring a carrier among the first carrier and the second carrier such as a ratio of a width of a transmission bandwidth of said carrier to a width of an intersect of the first transmission bandwidth and the second transmission bandwidth is greater than a threshold.

This enables to reduce the portion of the transmission bandwidth which is impacted by the overlapping carrier (second respectively first carrier) regarding the size of the transmission bandwidth. This enables to reduce the impact of the overlapping carrier on the carrier (first respectively second carrier), for example, the impact on the control data (control data can more easily be positioned in the non-overlapped portion of transmission bandwidth), impact on scheduling and/or allocating.

The ratio can be set according to several parameters, for example the size of the control data to be transmitted through the carrier or the quantity of synchronization signals, if the carrier is a primary cell or a secondary cell, etc.

A second aspect of the invention concerns a computer program product comprising code instructions to perform the method as described previously when said instructions are run by a processor.

A third aspect of the invention concerns an allocation unit allocating radio resources to at least one user equipment in a wireless communication system comprising at least a first carrier and a second carrier, said first carrier having a first transmission bandwidth said second carrier having a second transmission bandwidth, such as at least a first subcarrier of the first carrier is in the second transmission bandwidth the base station comprises:
- a processor; and
- a non-transitory computer-readable medium comprising instructions stored thereon, which when executed by the processor configure the base station to:
   ∘ Allocate second radio resources of the second carrier taking into account the first subcarrier used in an allocation of first radio resources of the first carrier.

According to an aspect of the invention, the non-transitory computer-readable medium may comprise instructions stored thereon, which when executed by the processor further configure the base station to allocate the first radio resources of the first carrier, said first radio resources allocated comprising the first subcarrier.

A fourth aspect of the invention concerns a user equipment in a wireless communication system comprising at least a first carrier and a second carrier, said first carrier having a first transmission bandwidth said second carrier having a second transmission bandwidth, such as at least a first subcarrier of the first carrier is in the second transmission bandwidth, the user equipment comprises:
- a processor; and
- a non-transitory computer-readable medium comprising instructions stored thereon, which when executed by the processor configure the user equipment to:
   ∘ receive an information enabling the user equipment to determine a reduced transmission bandwidth included in the second transmission bandwidth such as all radio resources allocated in the second carrier are in the reduced transmission bandwidth.

By reduced transmission bandwidth it is understood a portion of the transmission bandwidth such as all radio resources allocated to the user equipment in the carrier are in the reduced transmission bandwidth. The reduced transmission bandwidth may be strictly included in the transmission bandwidth. The reduced transmission bandwidth may be a continuous bandwidth or a fragmented bandwidth.

This may enable the user equipment to determine the part of a transmission bandwidth which is effectively used for transmission in the carrier. Therefore, the user equipment may filter the radio signal in the frequency domain to keep only the part of the radio signal in the reduced transmission bandwidth. Therefore, the complexity of the decoding on the receiver side is simplified. Therefore, the non-transitory computer-readable medium may comprise instructions stored thereon, which when executed by the processor may configure the user equipment to filter the radio signal according to the reduced bandwidth.

The reduced transmission bandwidth may be different between two user equipments using the same carrier. Indeed, user equipments may have different frequency bandwidths (inside the transmission bandwidth of the carrier) in which they are allocated radio resources.

The transmitter (for example the base station) may transmit the information. The information may be a frequency F₁ and/or F₂ as specified previously.

The user equipment described here is a user equipment to which are allocated radio resources from the second carrier, the same features can be implemented for a user equipment to which are allocated radio resources from the first carrier, thus the user equipment receives an information enabling it to determine a reduced transmission bandwidth included in the first transmission bandwidth such as all radio resources allocated in the first carrier are in the reduced transmission bandwidth.

According to an aspect of the invention, the first subcarrier is not in the reduced bandwidth. That is, in addition to the fact that all the radio resources allocated to the user equipment in the carrier are in the reduced transmission bandwidth, the reduced transmission bandwidth may not include the first subcarrier, or any subcarriers used for radio resources of another carrier.

The description here-above does not exclude the case where a user equipment is operating in a carrier aggregation mode, in that case the first carrier and/or the second carrier may be component carriers. Resource allocation in the first, respectively second carriers are made according to the respective reduced transmission bandwidths in each carrier.

The present invention is illustrated by way of example, and not by way of limitation, in the figures of the accompanying drawings, in which like reference numerals refer to similar elements and in which:
- Figure 1 illustrates a transmitter and receiver according to an embodiment of the invention.
- Figure 2 illustrates a configuration of carriers according to an embodiment of the invention.
- Figure 3 illustrates a configuration of carriers according to an embodiment of the invention.
- Figure 4 illustrates a configuration of carriers according to an embodiment of the invention.
- Figure 5 illustrates a configuration of carriers according to an embodiment of the invention.
- Figure 6 illustrates a flowchart representing the steps according to the invention.

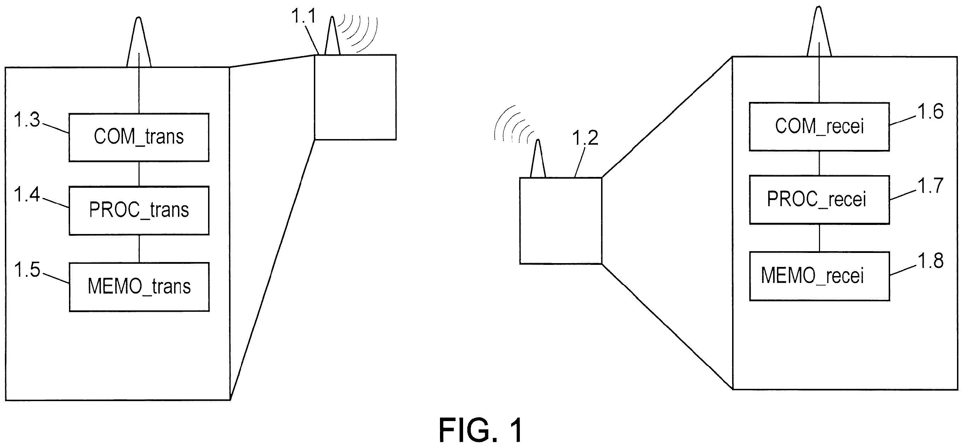

Referring to figure 1, there is shown a transmitter 1.1 transmitting a radio signal to a receiver 1.2. The user equipment 1.2 is in the cell of the transmitter 1.1. The wireless system may use transmission technologies based on OFDM, for example a LTE based transmission or a NR (New Radio) based transmission. In this example the transmitter 1.1 is a fixed station for example a base station in the context of LTE. The transmitter 1.1 can as well be another mobile station. In this example only one user equipment is represented. However the invention can be implemented with several user equipments. The allocation of the radio resources made by the transmitter 1.1 may concern all the user equipments in the cell of the transmitter 1.1.

The transmitter 1.1 comprises one communication module (COM_trans) 1.3, one processing module (PROC_trans) 1.4 and a memory unit (MEMO_trans) 1.5. The MEMO_trans 1.5 comprises a non-volatile unit which retrieves the computer program and a volatile unit which retrieves the configurations of the carriers (for example F_{1,min}, F_{1,max}, F_{2,min}, F_{2,max}) and especially the radio resources that can be allocated in each carrier (for example F₁ and F₂).

The PROC_trans 1.4 is configured to communicate with the user equipment 1.2 using the radio resources according to the allocation of radio resources. The COM_trans 1.3 is configured to transmit to the user equipment 1.2 a radio signal. The processing module 1.4 and the memory unit 1.5 may constitute the allocation unit device which allocates radio resources of the carriers to at least the user equipment 1.2, as previously described. In addition, the communication module 1.3, the processing module 1.4 and the memory unit 1.5 may be configured to transmit the information enabling the user equipment 1.2 to determine a reduced transmission bandwidth, for example the values F₁ and F₂.

The user equipment 1.2 comprises one communication module (COM_recei) 1.6, one processing module (PROC_recei) 1.7 and a memory unit (MEMO_recei) 1.8. The MEMO_recei 1.8 comprises a non-volatile unit which retrieves a computer program and a volatile unit which retrieves the configurations of the carriers (for example F_{1,min}, F_{1,max}, F_{2,min}, F_{2,max} or equivalent values for example the limits of the channel bandwidth of each carrier or the center of the transmission bandwidths) and may also retrieve an information enabling the user equipment to determine a reduced transmission bandwidth, for example F₁ and/or F₂ or any information which enables to determine F₁ and/or F₂ (for example, determining F₂ respectively F₁ based on F₁ respectively F₂).

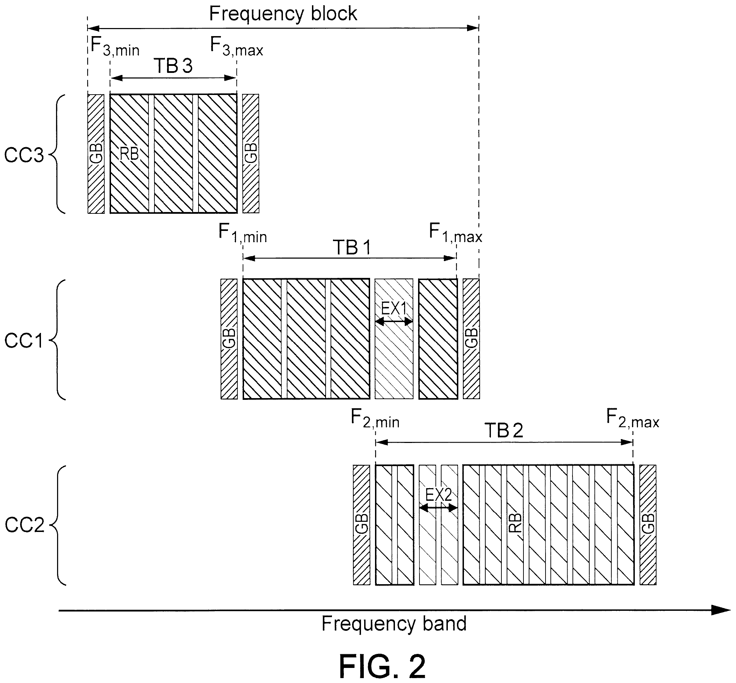

Referring to figure 2, there is shown three carriers (first carrier, CC1, second carrier, CC2 and third carrier, CC3 also referred as another carrier). The first carrier CC1 and the third carrier CC3 are in the same frequency block, which may be operated by the same operator. The second carrier CC2 may be operated by the same operator or by a different operator. If the second carrier CC2 is operated by a different operator and/or in the case where it is not possible to have tight coordination between CC1 and CC2, out of band emission restrictions may apply with respect to the exclusion bands (that is, the power radiated in the exclusion band must obey the same spectral constraints as out of band emissions). The distribution of the radio resources through the first and second carrier according to the invention may be dynamic (the distribution of the radio resources may be done for each allocation or for several allocations for example by the allocation unit device) or semi-static (when the distribution of radio resource is changed less often).

Regarding the carriers included in the frequency block these carriers may be component carriers in a carrier aggregation scheme. CC1 and CC3 may or may not be aggregated, that is, used in combination. For example, in the context of LTE or NR based wireless communication system, one carrier is a primary cell and the second is a secondary cell, the connection to the primary cell being necessary to use the secondary cell.

A carrier configured as a primary cell for a user equipment is a carrier that the user equipment initially finds and connects to. The user equipment is then in a connected mode. Then carriers can be configured as secondary cells for the user equipment. These secondary cells can be rapidly activated or deactivated to be used by the user equipment. The configuration of a carrier as a primary cell is specific to each user equipment, thus different devices may have different carriers configured as their primary cell.

Each carrier is composed of a transmission bandwidth (TB1 for the first carrier, TB2 for the second carrier and TB3 for the third carrier). The transmission bandwidth corresponds to the frequency bandwidth in which the radio resources of the carrier can be used. Each carrier can be configured with a guard band (GB) to guarantee limited out-of-band emissions within the adjacent carriers (e.g. when the adjacent carrier is used by another system, and/or another operator etc). Guard bands may be reduced or even suppressed in some cases (synchronous carriers belonging to a same operator and/or using a same subcarrier spacing). The transmission bandwidths are decomposed in radio resources. In the example of the figure 2 which is a LTE or NR based wireless communication system, the radio resources are resource blocks (RB) composed of several subcarriers. The decomposition of the transmission bandwidth depends on the numerology to which is configured the carrier, more specifically to the subcarrier spacing configuration (which corresponds to the space in the frequency domain between two contiguous subcarriers) of the carrier. On figure 2, CC1 and CC3 are therefore configured with the same subcarrier spacing configuration and CC2 is configured with a different subcarrier spacing configuration which is here twice smaller than the one of CC1. The invention is not limited to specific subcarrier spacing configurations, especially CC1 and CC3 can have different subcarrier spacing configurations (also referred as SSC), and/or each carrier may also have several subcarrier spacings which coexist within each carrier in different spectral portions of it. In a simplified manner, by subcarrier spacing configuration of a carrier we understand one of the subcarrier spacing configurations used in that carrier, and more specifically the one used within the overlapping portion of the carriers and/or in the portion neighboring the exclusion band.

The carriers of figure 2 (CC1, CC2 and CC3) are used at the same time and at least one geographical zone is under coverage of the three carriers, for example, the same base station can transmit data through these three carriers. In another example, two proximate base stations can transmit data through CC1 and CC3 respectively CC2. For the sake of simplicity, in the following, CC1, CC2 and CC3 will be three carriers configured on the same base station.

In the example of figure 2, CC1 and CC2 also share some same frequency resources. Indeed, the last two RBs of CC1 and the first four RBs of CC2 overlap. In this context using all these radio resources, at the same time and in the geographical zone above mentioned, may lead to strong inter carrier interferences.

When allocating the radio resources the allocation unit may allocate radio resources of the first carrier CC1 using a subcarrier (referred as a first subcarrier). The allocation unit may allocate the radio resources of the second carrier CC2 taking into account the fact that the allocation of radio resources in CC1 uses the first subcarrier. For example, the subcarriers in a frequency interval around the frequency of the first subcarrier may not be used to allocate radio resources of the second carrier CC2. The portion of the transmission bandwidth of CC2 which is excluded is referred to as an excluding frequency bandwidth of the second carrier (EX2). Radio resources used for any types of data may be excluded from the excluding frequency bandwidth except radio resources used for synchronization signals. Therefore, even in the excluding frequency bandwidth of a carrier, radio resources may be used for transmission of synchronization signals (referred to as SSI) of that carrier.

In the figures the SSI are not represented.

Conversely, the allocation unit may allocate the radio resources of the first carrier CC1 taking into account the fact that the allocation of radio resources in CC2 uses specific subcarriers. The portion of the transmission bandwidth of CC1 which is excluded is referred to an excluding frequency bandwidth of the first carrier (EX1).

These excluding frequency bandwidths (EX1 and EX2) may be defined by setting the corresponding radio resources of these carriers to reserved resources.

The excluding frequency bandwidths (EX1 and EX2) may be defined before defining any of the two allocations, that is, the excluding frequency bandwidths are pre-set. Therefore, two excluding frequency bandwidths (EX1 and EX2) may be defined and then the allocations of CC1 and CC2 are performed.

The excluding frequency bandwidths (EX1 or EX2) may be defined after defining one allocation. Therefore, one radio resource allocation is defined (for example in CC1), then the excluding frequency bandwidth (for example EX2) may be defined according to the allocation defined and then the allocation of CC2 is defined according to EX2.

The excluding frequency bandwidth may be a unique interval or a union of several intervals. The portion of a transmission bandwidth to which has been excluded the excluding frequency bandwidth is the reduced transmission bandwidth (RTB1 for CC1 and RTB2 for CC2).

In figure 2, EX2 corresponds to two RBs of CC2 (one RB of CC1 since the SSC of CC1 is twice the SSC of CC2) and EX1 corresponds to one RB of CC1. In this case, RTB1 and RTB2 are fragmented in two parts.

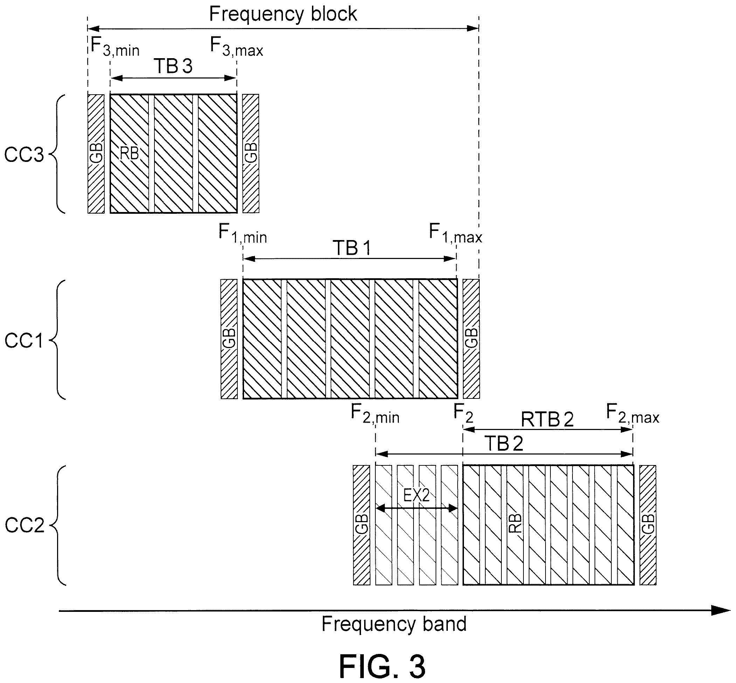

In figure 3, EX2 corresponds to four RBs of CC2. In this case the RTB1 and RTB2 are not fragmented. In this example EX2 corresponds to the intersection of TB1 and TB2.

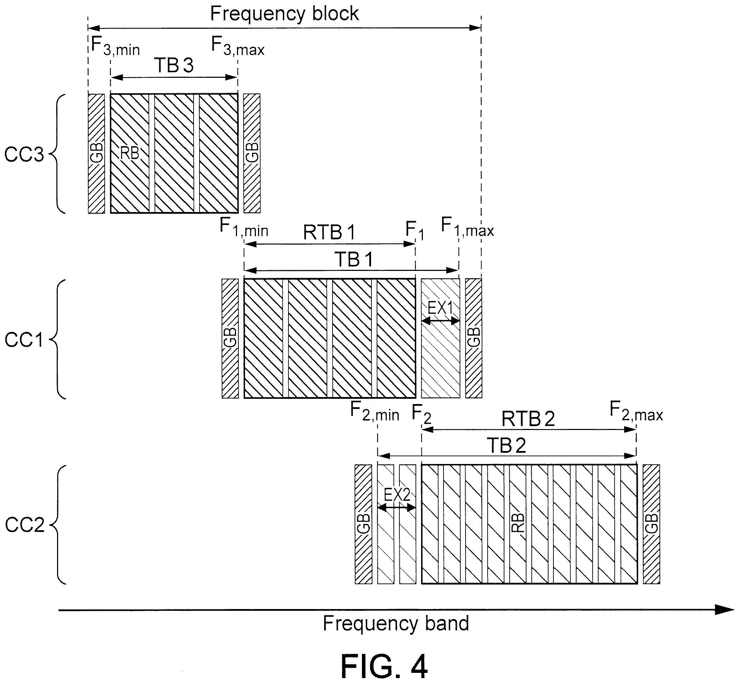

In figure 4, EX2 corresponds to four RBs of CC2 and EX1 corresponds to one RB of CC1. In this case the RTB1 and RTB2 are not fragmented.

In figures 3 and 4 the RTBs are not fragmented. These RTBs may be defined by the values F₁ and F₂. RTB1 is the reduce transmission bandwidth extending from F_{1,min} to F₁ and RTB2 is the reduce transmission bandwidth extending from F₂ to F_{2,max}.

F₁ and F₂ may be set such as |F₁ - F₂| at least equals to the subcarrier spacing configuration (SSC) to which is configured one of the overlapped carriers. When both carriers are configured with the same subcarrier spacing configuration, |F₁ - F₂| may be equal to that subcarrier spacing configuration or at least to a multiple of that subcarrier spacing configuration.

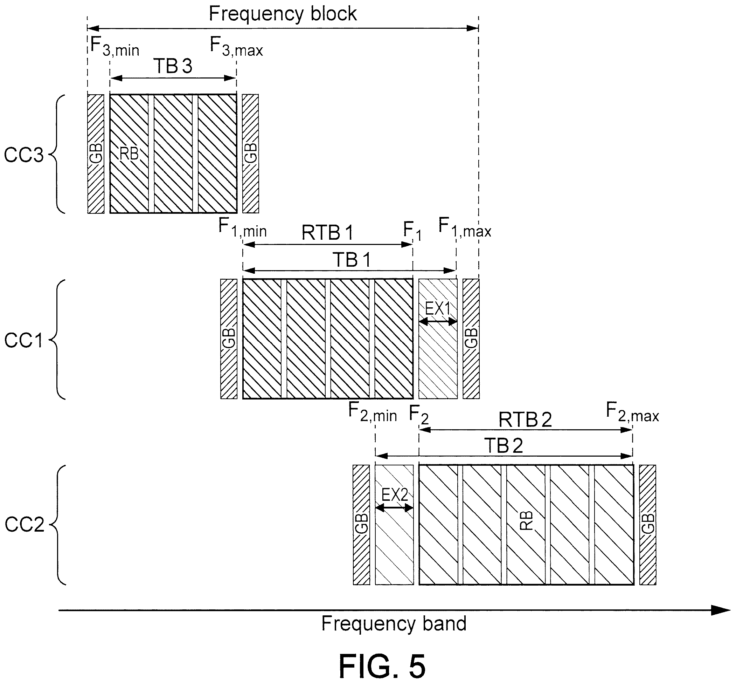

In figure 5 the two carriers CC1 and CC2 are configured with the same SSC and |F₁ - F₂| is equal to that SSC.

In the case the two overlapped carriers (CC1 and CC2) are not configured with the same SSC, F₁ and F₂ may be set such as |F₁ - F₂| is greater than a positive threshold. This threshold may be sufficient to reduce or avoid interferences between CC1 and CC2. However, the threshold may not be too important to avoid wasting too much radio resources.

In this case, the base station 1.1 may easily transmit information to the user equipment 1.2 enabling it to determine the RTB in which it will be allocated radio resources. Especially, when receiving the radio signal emitted by the base station 1.1 the UE 1.2 may filter to keep only the part of the radio signal in the RTB in which the UE 1.2 has been allocated radio resources. In addition, whether the radio resources are allocated to the user equipment 1.2 for downlink or uplink, the use of the RTB enables to reduce the signalization needed to fully signal all the radio resources used in a transmission bandwidth and/or is necessary for the user equipment in order to correctly determine the actual radio resources specified by the resource allocation signaled by the base station for uplink/downlink transmission.

Synchronization signals (SSI) are emitted by the transmitter 1.1 (for example the base station 1.1) through each carrier enabling the user equipment 1.2 that uses one of these carriers to be synchronized with it. It is critical for the UE to be correctly synchronized, therefore, correct reception and processing of these SSI by the UEs is important. When carriers overlap, these SSI may suffer important interferences. According to the invention, when two carriers overlap, SSI may be set in position (time and frequency) enabling to avoid or at least reduce these interferences.

Therefore, position of the SSI in the transmission bandwidth of one overlapped carrier (CC1 or CC2) may or may not take into account the RTBs of the one overlapped carrier and thus the EXs of the other overlapped carrier.

An RTB may be related to a user equipment (or user equipment specific), therefore, each UE using the same carrier may have its own RTB and therefore its own EX. These RTBs may be all the same or may be different. In this description the RTB related to a user equipment may be referred as a RTB of a user equipment or a RTBU or simply a RTB. In this description the EX related to a user equipment may be referred as a EX of a user equipment or a EXU or simply an EX.

RTBU may be different with respect to the concept of bandwidth part as described for example in the 3GPP specifications. For example, in the case of figure 2, a bandwidth part configured for a user in CC1 may encompass EX1; the user considers resource allocation within its bandwidth part as being further constrained by the RTBU configuration. In all examples, RTBU and bandwidth part may be separately configured. Bandwidth part involves the configuration of a set of many "per bandwidth part" parameters (such as for example reference signal configuration, subcarrier spacing configuration etc), while as RTBU is uniquely related to frequency domain restrictions. RTBU may for example be larger than the UE-specific bandwidth part, or larger than the maximum supported bandwidth of a UE.

However, in this description a RTB may correspond to the intersection of all the RTBs of all the user equipments which are allocated radio resources in a carrier. These RTB may be referred as RTB of a carrier or RTBC or simply RTB. In this description a EX may correspond to the union of all the EXs of all the user equipments which are allocated resources in a carrier. These EX may be referred as EX of a carrier or EXC or simply EX.

For the sake of simplicity, in the figures 2, 3, 4 only one RTB is represented in each carrier and is considered to be represented at a given time instance. These figures either represent a simplified communication system with only one user equipment, or simplified RTBs of the user equipments where all the user equipements have the same RTB and EX bandwidth or more generally the RTBs of the figures represents the intersection of all the RTBs of all the user equipments.

However, the signaling to each user equipment of the RTB in which it will be allocated radio resources may be limited to the signaling of the RTB of this user equipment which may be different for each user equipement. However, for the sake of simplicity, in the following all the user equipments using a same carrier may have the same RTB and EX, and therefore, a RTB of a carrier is the same as the RTB of a user equipment and the EX of a carrier is the same as the EX of a user equipment.

The SSI of one carrier (that is the SSI enabling the UE to synchronize with it) may be set to be positioned in the union of the RTBs of this carrier. Therefore, regarding figures 2, 3 and 4 the SSI may be set in RTB1 regarding the SSI of CC1 and/or in RTB2 regarding the SSI of CC2.

The SSI may also be deactivated in one or both of the overlapped carriers (CC1 and CC2). Though it is particularly advantageous to deactivate the SSI in the context of figure 3, that is, when an excluding frequency bandwidth is defined only in one carrier. For example, in figure 3, the SSI may not be deactivated for CC1 and may be deactivated for CC2.

The deactivation of the transmission of SSI may be only possible for carriers configured as SCell for all UEs scheduled within that carrier. The user equipment 1.2 may synchronize to the carrier configured as SCell throughout the carrier configured as PCell.

When a carrier is a primary cell (PCell) the SSI are more critical than the SSI of a carrier which is configured as a secondary cell (SCell). Therefore, SSI of a PCell carrier may be set to avoid the EX of this carrier, for example, by reducing the EX of this carrier or by setting the SSI of this carrier in other position than in the EX of this carrier. The RTB of this carrier and thus the EX of the other overlapped carrier may be determined to include these SSI positions.

In all the cases, the RTB of an overlapped carrier (for example CC1) and thus the EX of the other overlapped carrier (for example CC2) may be determined to include the SSI positions of CC1. When possible, that is when the SSIs of the two overlapped carriers do not conflict, that is, when SSI in CC1 do not occur in the same time and frequency positions than the SSI of CC2, the RTB of CC2 and thus the EX of CC1 may also be determined to include the SSI positions of CC2. The overlapped carrier may be represented by CC2 and the other overlapped carrier may be represented by CC1. The RTBs of each carrier are therefore determined according to the positions of the SSI in each carrier.

To enable such situation it may be relevant to configure the periodicity (in time domain) of the transmission of SSI of one carrier with a different (for example, lower) time domain periodicity than the transmission of the SSI of the other overlapped carrier. In another variant, the periodicity may be the same, but the time instants (for example, frames) where SSI is sent are different. Therefore, the probability that a collision between SSIs of two overlapped carriers occurs is reduced. In case of potential collision, dropping rules must be put in place (e.g. drop SSI transmission in SCell, or drop SSI transmission in the carrier with the highest time domain periodicity, etc). In the time periods where no collision occurs the above mentioned solution can be implemented, that is, determining the RTBs and EX of each carrier according to the SSI positions in each carrier.

If among the overlapped carriers (CC1 and CC2) one is a PCell and the other is a SCell, the lower periodicity of the transmission of SSI may be set for the SCell and the higher periodicity of the transmission of SSI may be set for the PCell.

The SSI may also be set in position without taking into account the RTBs, therefore, part of the SSI of one carrier may be sent through radio resources that are in the EX of that carrier. This may lead to strong interferences on part SSI. However, when the EX of a carrier is small compared to its RTB, the amount of SSI that are sent through the EX may be small compared to the amount of SSI that are sent through the RTB. Therefore, the carrier can be configured such as the widest RTB is wide compared to it EX.

When several carriers are operated in the same frequency block, for example by the same operator (with or without a carrier aggregation mechanism) the size of the TB of the overlapped carrier may be configured relatively to the size of the TBs of the other carriers of the frequency block and/or to the EX of the overlapped carrier.

For example, the overlapped carrier in the frequency block (CC1 in figures 2 to 5) may be configured with a TB of a greater or equal size than the size of the TBs of the other carriers in the frequency block (CC3 in figures 2 to 5).

For example, the overlapped carrier in the frequency block (CC1 in figures 2, 4 and 5) may be configured with a TB, such as the ratio between the size of the TB of CC1 to the size of EX is greater or equal than a threshold. To obtain such ratio the TBs of the other carriers in the frequency block (CC3) may be reduced and the TB of the overlapped carrier (CC1) may be increased. The EX may be any EX as defined above. For example, the EX1 may correspond to the intersect of TB1 and TB2, which is not represented in the figures.

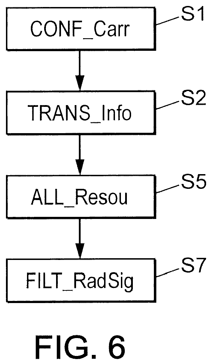

Referring to figure 6 there is shown a flowchart representing the steps according to the invention.

At step S1 the carriers are configured by the transmitter 1.1, for example a base station 1.1.

The carriers (CC1 and CC3) in the frequency block that are operated by the same operator are configured. If possible, the carriers out of the frequency block may also be configured jointly to the carriers in the frequency block (CC2), for example if these carriers are also operated by the operator which operates the carriers in the frequency block, or if an inter-operator agreement exists.

The overlapped carrier (CC1) may be configured regarding the size of the transmission bandwidth, the reduced transmission bandwidth and/or the excluding frequency bandwidth. The size of the transmission bandwidth and/or the size of the reduced transmission bandwidth may be determined according to the size of the intersection of TB1 and TB2 and/or the size of EX1 and/or the type of cell (PCell or SCell) to which is configured CC1 and/or subcarrier spacing configuration of CC1 as described previously.

If CC1 is configured for several user equipments with different types of cell configurations and/or different RTBs, RTB1 may be determined according to the union of all the RTBs or the widest RTB which is the one described in the figures 2 to 5 and/or considering the PCell type if the carrier is configured as a PCell for at least one UE.

The EX1 may be configured according to the RTB of the other overlapped carrier (CC2) if configured previously to CC1 and/or to the scheme of transmission of SSI used in CC1 as described previously.

EX1 and EX2 may also be determined jointly. Therefore, the operator(s) of CC1 and CC2 may insure that the union of EX1 and EX2 covers the intersection of TB1 and TB2 to ensure that the radio resources of CC1 do not collide with the radio resources of CC2.

RTB1 and RTB2 may also be determined jointly. Therefore, the operator(s) of CC1 and CC2 may insure that the intersection of RTB 1 and RTB2 is empty to ensure that the radio resources of CC1 do not collide with the radio resources of CC2, at the exception of SSI of one carrier that may span frequency bands in the other carrier under the specific configuration earlier described in this document.

The overlapped carrier (CC1) may be configured regarding the synchronization signals: positions in time and frequency of the synchronization signals (SSI) in the carrier, for example determining a time periodicity of the SSI in CC1, determining the frequency position in TB1 of these SSI. These positions may be determined according to the type of cell (PCell or SCell) to which is configured CC1, to the periodicity of the SSI in the other overlapped carrier (CC2), to EX1 as previously explained.

The configuration of CC1 may be performed by the base station 1.1. The base station 1.1 may therefore receive part of or all the parameters mentioned above if needed and/or if not at the disposal of the base station 1.1 (for example if the base station 1.1 also configures CC2).

The configuration of the carriers regarding the TB, RTB and EX may be dynamic, that is, may be modified for each allocation of radio resources or periodically (for example every 10 allocations of radio resources) according for example to an amount of data to transmit through each overlapped carrier or to the criticality or high priority of the data to be transmitted in one of the carriers. The configuration of the carriers regarding the TB, RTB and EX may be semi-static.

The configuration of the other overlapped carrier (CC2) may be performed based on the same parameters.

These configuration parameters (TB1, TB2, RTB1, RTB2, EX1, EX2, SSI for CC1, SSI for CC2, PCell/SCell) may be determined in different orders depending on whether or not each parameter is used to determine the other parameters.

At step S3, once the carriers are configured, the transmitter 1.1 transmits information to the UEs enabling each UE to determine its RTB. The transmitter 1.1 can therefore transmit the limits of the RTB1, respectively RTB2, which differs from the limits of TB1, respectively TB2. For example, the transmitter 1.1 may transmit a value F₁, respectively F₂ or more generally any information enabling to retrieve F₁ respectively F₂ to a UE which will be allocated radio resources in TB1, respectively TB2. For example, the transmitter 1.1 may transmit only the value F₁ (respectively F₂), based on this value the UE retrieves F₂ (respectively F₁), for example, F₂= F₁+Δ_{SSC} if the same SSC is used by both carriers, or F₂= F₁+Δ_{SSC1,2}. In another example, |F₂-F₁| equals a predefined guard band. The transmitter 1.1 may transmit a value F, different from F₁ or F₂, for example F may be the frequency of a subcarrier that is in the middle of a RB. F₁ and F₂ may be deduced from F, for example F₁ may correspond to the last subcarrier previous to the RB and F₂ may correspond to the first subcarrier next to RB.

Based on this information, each UE determines its RTB.

At step S5, the allocation unit (which may be included in the base station 1.1) allocates radio resources. The allocation unit may be specific to each carrier or to the base station 1.1 or to the carriers operated by the same operator.

The allocation unit allocates the radio resources of CC3 and/or CC1 and/or CC2 to the UEs in the coverage of these carriers.

Then the base station 1.1 informs the UEs of their radio resource allocation. This information may be transmitted through a control channel. This information may be transmitted with the information transmitted at step S3 or transmitted after.

At step S7, the user equipment 1.2 which has been allocated radio resources, either receives the radio signal containing these radio resources or emits a radio signal using these radio resources, depending on if the radio resources are allocated for downlink transmission or uplink transmission. In case of downlink transmission the UE 1.2 may filter the radio signal to keep only the part of the signal corresponding to the RTB the UE 1.2 determined at step S3.

## Claims

1. A method for allocating radio resources to at least one user equipment in a wireless communication system comprising at least a first carrier and a second carrier, said first carrier having a first transmission bandwidth said second carrier having a second transmission bandwidth, such as at least a first subcarrier of the first transmission bandwidth is in the second transmission bandwidth, the method comprising:
- Allocating first radio resources of the first carrier, said first radio resources allocated comprising the first subcarrier;
- Allocating second radio resources of the second carrier taking into account the first subcarrier used in the allocation of the first radio resources.

2. The method according to claim 1, wherein an excluding frequency bandwidth including the first subcarrier is excluded from the allocation of second radio resources.

3. The method according to claim 2, wherein the excluding frequency bandwidth corresponds to an intersect of the first transmission bandwidth and the second transmission bandwidth.

4. The method according to any one of the previous claims further comprises deactivating transmission of synchronization signals in one carrier among the first carrier and the second carrier.

5. The method according to one of the previous claims further comprises configuring a first time periodicity of transmission of synchronization signals in the first carrier and a second time periodicity of transmission of synchronization signals in the second carrier such as to reduce transmission of synchronization signals in the first carrier that occur at the same time as transmission of synchronization signals in the second carrier.

6. The method according to one of the previous claims further comprises, configuring one carrier among the first and the second carrier such as synchronization signals in said one carrier are transmitted in a transmission bandwidth of said one carrier excluding at least part of an intersect of the first transmission bandwidth and of the second transmission bandwidth.

7. The method according to one of the previous claims wherein at least one synchronization signal of the first carrier is transmitted through the first subcarrier.

8. The method according to claim 7 further comprises defining radio resources of the second carrier corresponding to the first subcarrier as reserved resources.

9. The method according to one of the previous claims wherein F_{1,min} is a lowest frequency among frequencies of subcarriers in the first transmission bandwidth and F_{1,max} is a highest frequency among frequencies of subcarriers in the first transmission bandwidth and with F_{2,min} is a lowest frequency among frequencies in the second transmission bandwidth and F_{2,max} is a highest frequency among frequencies of subcarriers in the second transmission bandwidth, if F_{1,min} is smaller than F_{2,min} then at the exclusion of radio resources used to transmit synchronization signals, the first radio resources allocated are included in a frequency band from F_{1,min} to F₁ and the second radio resources allocated are included in a frequency band from F₂ to F_{2,max} with F_{2,min}-Δ_{SSC1} ≤ F₁ < F₂ < F_{1,max} or F_{2,min} < F₁ < F₂ ≤ F_{1,max}+Δ_{SSC2}, if F_{1,min} is greater than F_{2,min} then at the exclusion of radio resources used to transmit synchronization signals, the first radio resources allocated are included in a frequency band from F₁ to F_{1,max} and the second radio resources allocated are included in a frequency band from F_{2,min} to F₂ with F_{1,min} - Δ_{SSC2} ≤ F₂ < F₁ < F_{2,max} or F_{1,min} < F₂ < F₁ ≤ F_{2,max} + Δ_{SSC1}, where Δ_{SSC1}, respectively Δ_{SSC2} is a subcarrier configuration of the subcarriers in the first, respectively second transmission bandwidth.

10. The method according to claim 9 wherein if a subcarrier spacing configuration of the first carrier is equal to a subcarrier spacing configuration of the second carrier, then |F₁ - F₂| at least equals the subcarrier spacing of said subcarrier spacing configuration.

11. The method according to claim 9 wherein if a subcarrier spacing configuration of the first carrier is different from a subcarrier spacing configuration of the second carrier, then |F₁ - F₂| is greater than a positive threshold.

12. The method according to one of the previous claims wherein a carrier among the first carrier and the second carrier is included in a frequency block, said frequency block comprising another carrier, the method further comprising configuring said carrier among the first carrier and the second carrier and the another carrier such as a transmission bandwidth of said carrier among the first carrier and the second carrier is greater or equal than a transmission bandwidth of the another carrier.

13. The method according to one of the previous claims further comprising configuring a carrier among the first carrier and the second carrier such as a ratio of a width of a transmission bandwidth of said carrier to a width of an intersect of the first transmission bandwidth and the second transmission bandwidth is greater than a threshold.

14. Computer program product comprising code instructions to perform the method according to any one of claims 1 to 13, when said instructions are run by at least a processor.

15. An allocation unit allocating radio resources to at least one user equipment in a wireless communication system comprising at least a first carrier and a second carrier, said first carrier having a first transmission bandwidth said second carrier having a second transmission bandwidth, such as at least a first subcarrier of the first carrier is in the second transmission bandwidth the base station comprises:
- a processor; and
- a non-transitory computer-readable medium comprising instructions stored thereon, which when executed by the processor configure the base station to:
∘ Allocate second radio resources of the second carrier taking into account the first subcarrier used in an allocation of first radio resources.

16. A user equipment in a wireless communication system comprising at least a first carrier and a second carrier, said first carrier having a first transmission bandwidth said second carrier having a second transmission bandwidth, such as at least a first subcarrier of the first carrier is in the second transmission bandwidth, the user equipment comprises:
- a processor; and
- a non-transitory computer-readable medium comprising instructions stored thereon, which when executed by the processor configure the user equipment to:
∘ receive an information enabling the user equipment to determine a reduced transmission bandwidth included in the second transmission bandwidth such as all radio resources allocated to the user equipmment in the second carrier are in the reduced transmission bandwidth.
